# EUROPÄISCHE PATENTSCHRIFT

(11) **EP 2 835 890 B1**
(45) Veröffentlichungstag und Bekanntmachung des Hinweises auf die Patenterteilung: **30.12.2015**
(21) Anmeldenummer: 13179916.5
(22) Anmeldetag: 09.08.2013
(51) Int. Cl.: H02K 5/14, H01R 39/59

(54) **Elektrische Maschine mit gesichertem Abheben der Bürsten bei Stillstand**
Electric machine with secure lifting of the brushes when at a standstill
Machine électrique avec levage sécurisé des balais à l'arrêt

(43) Veröffentlichungstag der Anmeldung: 11.02.2015
(73) Patentinhaber: Siemens Aktiengesellschaft, 80333 München (DE)
(72) Erfinder: Binder, Herbert, 94127 Neuburg (DE); Memminger, Oliver, 94127 Neuburg a. Inn (DE); Ringleb, Ulrich, Dr., 35415 Pohlheim (DE); Voges, Michael, 85406 Zolling (DE)

(56) Entgegenhaltungen:
- DE-A1- 2 947 753
- DE-A1-102007 018 002
- US-A- 4 739 208
- US-A1- 2003 048 027

## Beschreibung

Die vorliegende Erfindung betrifft eine elektrische Maschine,
- wobei die elektrische Maschine einen Stator und einen Rotor aufweist,
- wobei der Rotor drehbar gelagert ist und einen Schleifring aufweist,
- wobei statorfest eine Bürstenanordnung angeordnet ist,
- wobei die Bürstenanordnung einen Bürstenhalter aufweist, in dem eine Bürste angeordnet ist,
- wobei die Bürste im Betrieb der elektrischen Maschine im Bürstenhalter beweglich gelagert und mittels einer Andrückeinrichtung an den Schleifring angedrückt wird,
- wobei der Bürste eine Kontaktanordnung zugeordnet ist, die von der Bürste ausgelöst wird, wenn die Bürste einen vorbestimmten Verschleißzustand erreicht.

Derartige elektrische Maschinen sind allgemein bekannt. Rein beispielhaft wird auf die DE 195 21 702 A1, die DE 86 28 227 U1, die DE 197 58 235 A1 und die DE 196 19 733 A1 verwiesen. Eine weitere ähnliche Maschine ist aus US 2003/048027 bekannt.

Bei elektrischen Maschinen, bei welchen Bürsten vorhanden sind, besteht im Falle eines längeren Stillstands der elektrischen Maschine die Gefahr, dass der Schleifring an der Stelle, an welcher die Bürste am Schleifring anliegt, korrodiert. Die Ursache dieser Korrosion besteht darin, dass der Schleifring und die Bürste aus verschiedenen Materialien bestehen und daher im Falle von Feuchtigkeit die Gefahr der Bildung eines galvanischen Elements, bestehend aus Bürste und Schleifring, besteht.

Zur Vermeidung einer derartigen Stillstandskorrosion ist aus der DE 94 00 080 U1 bekannt, die Bürsten mittels einer motorisch betätigten Einrichtung von den Schleifringen abzuheben und bei Bedarf wieder auf die Schleifringe abzusenken. Diese Ausgestaltung ist relativ aufwändig. Sie ist daher nur dann sinnvoll, wenn im Laufe der Zeit die Bürsten des Öfteren von den Schleifringen abgehoben und wieder auf sie abgesenkt werden sollen.

Die Aufgabe der vorliegenden Erfindung besteht darin, eine elektrische Maschine der eingangs genannten Art derart weiter zu entwickeln, dass eine Stillstandskorrosion auf einfache und zuverlässige Weise vermieden wird und gleichzeitig eine versehentliche Inbetriebnahme der elektrischen Maschine mit abgehobenen Bürsten zuverlässig vermieden wird.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 und 3.

Erfindungsgemäß wird eine elektrische Maschine der eingangs genannten Art dadurch ausgestaltet,
- dass die Bürste mittels eines Sperrelements gegen eine von der Andrückeinrichtung ausgeübte Andrückkraft vom Schleifring abgehoben ist und
- dass das Sperrelement derart ausgelegt ist, das es die Kontaktanordnung auslöst.

Das Sperrelement kann also ein rein mechanisches Element sein, das manuell eingesetzt und auch wieder entfernt werden muss. Es ist jedoch derart ausgebildet, dass es die Kontaktanordnung auslöst. Wenn daher in fehlerhafter Weise versucht wird, die elektrische Maschine mit eingesetztem Sperrelement zu betreiben, wird die Kontaktanordnung ausgelöst, welche einen Verschleiß der Bürste anzeigt. Eine Bedienperson wird daher veranlasst, die Bürste auszuwechseln. Bei dem Versuch, die Bürste auszuwechseln, erkennt die Bedienperson jedoch, dass nicht die Bürste verschlissen ist, sondern dass das Sperrelement eingesetzt ist. Die Bedienperson kann daher das Sperrelement entfernen und sodann - nunmehr ordnungsgemäß - die elektrische Maschine in Betrieb nehmen.

Das Sperrelement ist vom Ansatz her bereits durch die Andrückkraft der Andrückeinrichtung fixiert und gehalten. Vorzugsweise ist jedoch zusätzlich das Sperrelement mittels eines Sicherungselements gegen selbsttätiges Lösen gesichert. Dadurch wird insbesondere auch erreicht, dass Vibrationen, Schwingungen und Erschütterungen nicht zu einem Herausfallen des Sperrelements führen können.

Das Sicherungselement kann nach Bedarf ausgebildet sein. Insbesondere kann es als Kabelbinder ausgebildet sein. Diese Ausgestaltung ist einfach, kostengünstig und zuverlässig.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine,
- FIG 2: einen Schnitt durch eine Bürstenanordnung von der Seite ohne Sperrelement,
- FIG 3: einen Schnitt durch die Bürstenanordnung von FIG 2 längs einer Linie III-III in FIG 2,
- FIG 4: eine Draufsicht auf die Bürstenanordnung von FIG 2 aus einer Richtung IV-IV in FIG 2,
- FIG 5: die Bürstenanordnung von FIG 2 mit Sperrelement und
- FIG 6: eine Draufsicht auf die Bürstenanordnung von FIG 5 aus einer Richtung VI-VI in FIG 5.

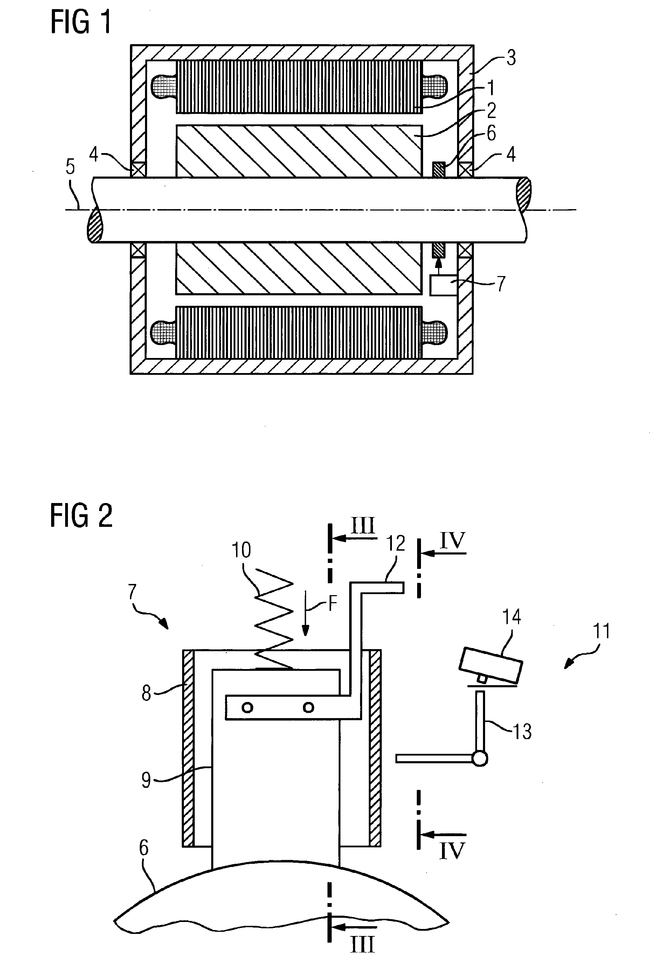

Gemäß FIG 1 weist eine elektrische Maschine einen Stator 1 und einen Rotor 2 auf. Der Stator 1 kann beispielsweise in einem Gehäuse 3 angeordnet sein. Der Rotor 2 ist in Lagern 4 drehbar gelagert, so dass er um eine Rotationsachse 5 rotierbar ist. Die Lager 4 sind üblicherweise in Lagerschilden angeordnet, die beispielsweise Bestandteil des Gehäuses 3 sein können.

Der Rotor 2 weist (mindestens) einen Schleifring 6 auf. Der Schleifring 6 wirkt mit einer Bürstenanordnung 7 zusammen, die statorfest angeordnet ist. Die Bürstenanordnung 7 kann alternativ am Stator 1 selbst oder am Gehäuse 3 angeordnet sein. Über die Bürstenanordnung 7 und den Schleifring 6 wird ein Strom in den Rotor 2 eingespeist oder ausgespeist.

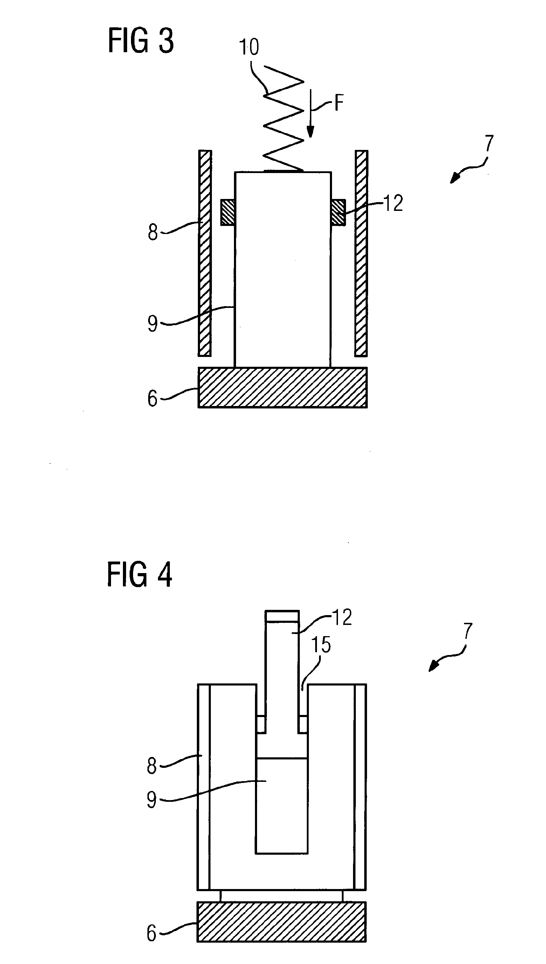

Die Bürstenanordnung 7 weist gemäß den FIG 2 bis 6 einen Bürstenhalter 8 auf, in dem eine Bürste 9 angeordnet ist. Im Betrieb der elektrischen Maschine - siehe die FIG 2 bis 4 - ist die Bürste 9 im Bürstenhalter 8 beweglich gelagert. Insbesondere wird die Bürste 9 mittels einer Andrückeinrichtung 10 - beispielsweise einer Federeinrichtung - an den Schleifring 6 angedrückt.

Im Laufe des Betriebs der elektrischen Maschine verschleißt die Bürste 9. Um rechtzeitig erkennen zu können, dass die Bürste 9 verschlissen ist, ist der Bürste 9 eine Kontaktanordnung 11 zugeordnet. Die Kontaktanordnung 11 wird, wie allgemein bekannt ist, von der Bürste 9 ausgelöst, wenn die Bürste 9 einen vorbestimmten Verschleißzustand erreicht. Beispielsweise kann an der Bürste 9 gemäß der Darstellung in den FIG 2 bis 4 ein schwanenhalsähnlicher Ausleger 12 befestigt sein, der sich zusammen mit der Bürste 9 bewegt und einen Hebel 13 betätigt, mittels dessen seinerseits wiederum ein Schalter 14 betätigt wird. Es sind jedoch ebenso andere Gestaltungen möglich. Im Rahmen der in den FIG 2 bis 4 dargestellten konkreten Ausgestaltung weist der Bürstenhalter 8 im Bereich des Auslegers 12 üblicherweise eine Ausnehmung 15 auf, so dass der Ausleger 12 das Andrücken der Bürste 9 an den Schleifring 6 nicht behindert.

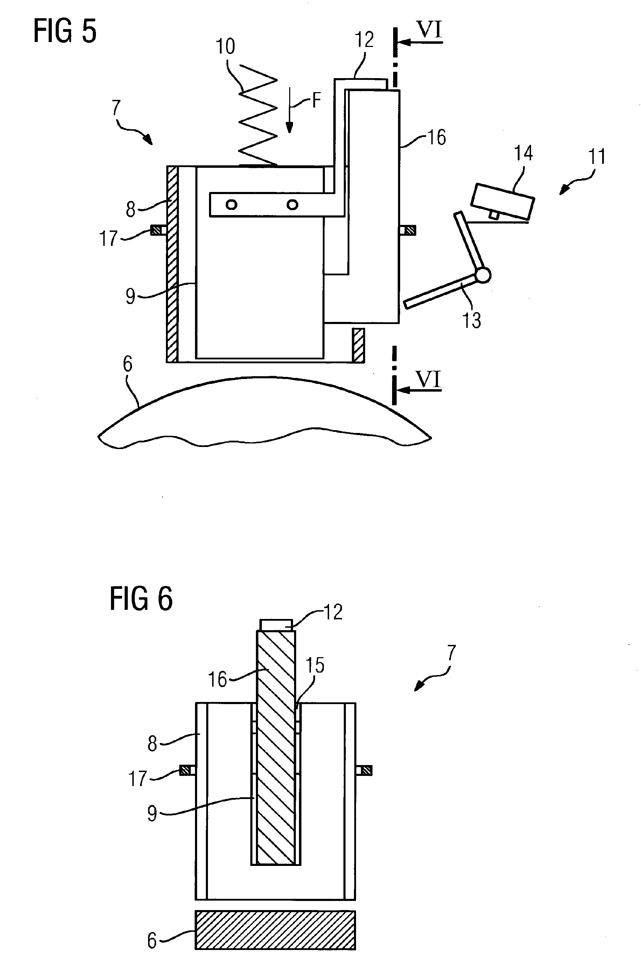

Wenn die elektrische Maschine über längere Zeit nicht betrieben werden soll, ist es sinnvoll, die Bürste 9 vom Schleifring 6 abzuheben, um die Gefahr einer Stillstandskorrosion zu vermeiden. Zu diesem Zweck wird die Bürste 9 manuell mit oder ohne Zuhilfenahme eines Werkzeugs gegen eine von der Andrückeinrichtung 10 ausgeübte Andrückkraft F vom Schleifring 6 abgehoben. Sodann wird - siehe die FIG 5 bis 6 - die Bürste 9 mittels eines Sperrelements 16 fixiert. Die Bürste 9 ist dadurch mittels des Sperrelements 16 dauerhaft gegen die Andrückkraft F vom Schleifring 6 abgehoben. Beispielsweise kann im Rahmen der konkreten Ausgestaltung der FIG 2 bis 6 das Sperrelement 16 einerseits an der Unterkante der Ausnehmung 15 und andererseits an der Unterseite des Auslegers 12 angreifen. Das Sperrelement 16 ist derart ausgelegt, dass es die Kontaktanordnung 11 auslöst.

Soweit es einen reinen Stillstand betrifft, ist das Sperrelement 16 bereits durch die Andrückkraft F gegen selbsttätiges Lösen gesichert. Falls Vibrationen, Schwingungen, Erschütterungen und dergleichen mehr auftreten können, besteht jedoch die Gefahr, dass das Sperrelement 16 sich im Laufe der Zeit verlagert. Die Verlagerung kann so stark sein, dass das Sperrelement 16 abrutscht oder dergleichen, so dass es seinen Zweck nicht mehr erfüllen kann. Vorzugsweise ist daher entsprechend der Darstellung in den FIG 5 bis 6 das Sperrelement 16 mittels eines Sicherungselements 17 gegen selbsttätiges Lösen gesichert. Das Sicherungselement 17 kann beispielsweise als Kabelbinder ausgebildet sein.

Zusammengefasst betrifft die vorliegende Erfindung folgenden Sachverhalt:
Eine elektrische Maschine weist einen Stator 1 und einen Rotor 2 auf. Der Rotor 2 ist drehbar gelagert und weist einen Schleifring 6 auf. Statorfest ist eine Bürstenanordnung 7 angeordnet, die einen Bürstenhalter 8 aufweist, in dem eine Bürste 9 angeordnet ist. Die Bürste 9 ist im Betrieb der elektrischen Maschine im Bürstenhalter 8 beweglich gelagert und wird mittels einer Andrückeinrichtung 10 an den Schleifring 6 angedrückt. Der Bürste 9 ist eine Kontaktanordnung 11 zugeordnet, die von der Bürste 9 ausgelöst wird, wenn die Bürste 9 einen vorbestimmten Verschleißzustand erreicht. Die Bürste 9 ist mittels eines Sperrelements 16 gegen eine von der Andrückeinrichtung 10 ausgeübte Andrückkraft F vom Schleifring 6 abgehoben. Das Sperrelement 16 ist derart ausgelegt, dass es die Kontaktanordnung 11 auslöst.

Die vorliegende Erfindung weist viele Vorteile auf. Insbesondere wird auf einfache und zuverlässige Weise eine Stillstandskorrosion vermieden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Stator (1) und einen Rotor (2) aufweist,
- wobei der Rotor (2) drehbar gelagert ist und einen Schleifring (6) aufweist,
- wobei statorfest eine Bürstenanordnung (7) angeordnet ist,
- wobei die Bürstenanordnung (7) einen Bürstenhalter (8) aufweist, in dem eine Bürste (9) angeordnet ist,
- wobei die Bürste (9) im Betrieb der elektrischen Maschine im Bürstenhalter (8) beweglich gelagert und mittels einer Andrückeinrichtung (10) an den Schleifring (6) angedrückt wird,
- wobei der Bürste (9) eine Kontaktanordnung (11) zugeordnet ist, die von der Bürste (9) ausgelöst wird, wenn die Bürste (9) einen vorbestimmten Verschleißzustand erreicht,
- wobei die Bürste (9) mittels eines Sperrelements (16) gegen eine von der Andrückeinrichtung (10) ausgeübte Andrückkraft (F) vom Schleifring (6) abgehoben ist,
- wobei das Sperrelement (16) derart ausgelegt ist, dass es die Kontaktanordnung (11) auslöst.

2. Elektrische Maschine nach Anspruch 1, **dadurch gekennzeichnet, dass** das Sperrelement (16) mittels eines Sicherungselements (17) gegen selbsttätiges Lösen gesichert ist.

3. Elektrische Maschine nach Anspruch 2, **dadurch gekennzeichnet, dass** das Sicherungselement (17) als Kabelbinder ausgebildet ist.

## Claims

1. Electric machine,
- wherein the electric machine has a stator (1) and a rotor (2),
- wherein the rotor (2) is mounted in a rotatable manner and has a slip ring (6),
- wherein a brush arrangement (7) is disposed as fixed to the stator,
- wherein the brush arrangement (7) has a brush holder (8) in which a brush (9) is disposed,
- wherein the brush (9) is mounted in the brush holder (8) in a moveable manner during operation of the electric machine and is pressed onto the slip ring (6) by means of a pressing-on device (10),
- wherein the brush (9) is allocated a contact arrangement (11) which is triggered by the brush (9) when the brush (9) reaches a predefined state of wear,
- wherein the brush (9) is withdrawn from the slip ring (6) by means of a locking element (16) against a pressing-on force (F) exerted by the pressing-on device (10),
- wherein the locking element (16) is designed such that it triggers the contact arrangement (11).

2. Electric machine according to claim 1, **characterised in that** the locking element (16) is secured by means of a securing element (17) against automatic activation.

3. Electric machine according to claim 2, **characterised in that** the securing element (17) is embodied as a cable tie.

## Revendications

1. Machine électrique,
- dans laquelle la machine électrique a un stator ( 1 ) et un rotor ( 2 ),
- dans laquelle le rotor ( 2 ) est monté tournant et a une bague ( 6 ) collectrice,
- dans laquelle un agencement ( 7 ) de balais est monté de manière fixe sur le stator,
- dans laquelle l'agencement ( 7 ) de balais a un porte-balais ( 8 ) dans lequel est monté un balai ( 9 ),
- dans lequel le balai ( 9 ) est, lorsque la machine électrique est en fonctionnement, monté mobile dans le porte-balais ( 8 ) et peut être appliqué à la bague ( 6 ) collectrice au moyen d'un dispositif ( 10 ) d'application,
- dans laquelle au balai ( 9 ) est associé un agencement ( 11 ) de contact, qui est déclenché par le balai ( 9 ) lorsque le balai ( 9 ) atteint un état d'usure défini à l'avance,
- dans laquelle le balai est, au moyen d'un élément ( 16 ) d'arrêt, soulevé de la bague ( 6 ) collectrice à l'encontre de la force d'application appliquée par le dispositif ( 10 ) d'application,
- dans laquelle l'élément ( 16 ) d'arrêt est conçu de manière à déclencher l'agencement ( 11 ) de contact.

2. Machine électrique suivant la revendication 1, **caractérisée en ce que** l'élément ( 16 ) d'arrêt est empêché de se détacher automatiquement au moyen d'un élément ( 17 ) de sécurisation.

3. Machine électrique suivant la revendication 2, **caractérisée en ce que** l'élément ( 17 ) de sécurisation est constitué sous la forme d'un lien par câble.
